# EUROPEAN PATENT APPLICATION

(11) **EP 4 336 472 A1**
(43) Date of publication of application: **13.03.2024**
(21) Application number: 22211292.2
(22) Date of filing: 05.12.2022
(51) Int. Cl.: G07C 5/08, G07C 5/00

(54) **APPARATUS FOR MANAGING VEHICLE**

(30) Priority: 07.09.2022 KR 20220113400
(71) Applicant: Hyundai Mobis Co., Ltd., Gangnam-gu Seoul 06141 (KR)
(72) Inventor: KIM, Jang Ho, 16891 Gyeonggi-do (KR)
(74) Representative: Vossius & Partner Patentanwälte Rechtsanwälte mbB

(57) **Abstract**

An apparatus for managing a vehicle according to an embodiment may include a vehicle fault information management unit configured to manage information related to a fault of the vehicle, and a vehicle repair information provision unit configured to provide information related to repair of the vehicle based on analysis of the information related to the fault of the vehicle.

## Description

### CROSS-REFERENCE TO RELATED APPLICATION

This application claims priority to and the benefit of Korean Patent Application No. 10-2022-0113400, filed on September 7, 2022, the disclosure of which is incorporated herein by reference in its entirety.

### BACKGROUND

### 1. Field of the Invention

An embodiment of the present invention relates to an apparatus and method for managing a vehicle, and a device mounted on the vehicle, and specifically, to an apparatus for adding a vehicle fault mode for improving customer service.

### 2. Discussion of Related Art

Vehicles have various problems which occur while traveling, but since they are not easy to reproduce, it is not easy to find faults. In addition, when there is a component which requires replacement during repair, there is also a problem that a driver should visit a center again if there is not the corresponding component in the center.

It is difficult to identify the cause of a component fault, and there are often cases in which unnecessary costs are incurred.

Although many studies are being conducted to solve these problems, there is a problem in that it is difficult to solve these problems with conventional methods.

### SUMMARY OF THE INVENTION

An apparatus for managing a vehicle according to an embodiment may include a vehicle fault information management unit configured to manage information related to a fault of the vehicle, and a vehicle repair information provision unit configured to provide information related to the repair of the vehicle based on analysis of information related to the fault of the vehicle.

The apparatus for managing the vehicle according to an embodiment may further include a fault state save button operation information management unit configured to manage information on an operation of the fault state save button configured to store a fault state of the vehicle.

According to the apparatus for managing the vehicle according to an embodiment, when the fault state save button operation management unit confirms the operation of the fault state save button of the vehicle, the vehicle fault information management unit may receive the information related to the fault of the vehicle from the vehicle.

The vehicle repair information provision unit according to an embodiment may transmit to the vehicle or a user terminal the information related to the repair of the vehicle derived using big data analysis of the information related to the fault of the vehicle.

The vehicle repair information provision unit according to an embodiment may provide the information related to the repair of the vehicle according to a fault level.

A device mounted on a vehicle according to an embodiment may include a vehicle fault information transmission unit configured to transmit information related to a fault of the vehicle to an apparatus for managing the vehicle, and a vehicle repair information reception unit configured to receive information related to repair of the vehicle provided based on analysis of the information related to the fault of the vehicle from the apparatus for managing the vehicle.

The device mounted on the vehicle according to an embodiment may further include a fault state save button configured to store a fault state of the vehicle.

When the fault state save button is operated, the vehicle fault information transmission unit according to an embodiment may transmit the information related to the fault of the vehicle to the apparatus for managing the vehicle.

The vehicle repair information reception unit according to an embodiment may receive the information related to the repair of the vehicle derived using big data analysis of the information related to the fault of the vehicle.

The vehicle repair information reception unit according to an embodiment may receive the information related to the repair of the vehicle according to a fault level.

A method of managing a vehicle according to an embodiment may include managing information related to a fault of the vehicle, and providing information related to repair of the vehicle based on analysis of the information related to the fault of the vehicle.

The method of managing the vehicle according to an embodiment may further include managing information on an operation of a fault state save button configured to store a fault state of the vehicle.

The managing of the information on the operation of the fault state save button according to an embodiment may include confirming the operation of the fault state save button of the vehicle, and the managing of the information related to the fault of the vehicle may include receiving the information related to the fault of the vehicle from the vehicle when the operation of the fault state save button of the vehicle is confirmed.

The providing of the information related to the repair of the vehicle according to an embodiment may include transmitting to the vehicle or a user terminal the information related to the repair of the vehicle derived using big data analysis of the information related to the fault of the vehicle.

The providing of the information related to the repair of the vehicle according to an embodiment may include providing the information related to the repair of the vehicle according to a fault level.

### BRIEF DESCRIPTION OF THE DRAWINGS

The above and other objects, features and advantages of the present invention will become more apparent to those of ordinary skill in the art by describing in detail exemplary embodiments thereof with reference to the accompanying drawings, in which:
FIG. 1 is a block diagram of an apparatus for managing a vehicle according to an embodiment;
FIG. 2 is a flowchart of a method of managing the vehicle according to an embodiment;
FIG. 3 is a flowchart of the method of managing the vehicle according to an embodiment;
FIG. 4 is a flowchart of remote diagnosis of the method of managing the vehicle according to an embodiment; and
FIG. 5 is a block diagram of a device mounted on the vehicle according to an embodiment.

### DETAILED DESCRIPTION OF EXEMPLARY EMBODIMENTS

Hereinafter, exemplary embodiments of the present invention will be described in detail with reference to the accompanying drawings.

However, the technical spirit of the present invention is not limited to any of the embodiments described but may be implemented in various different forms, and one or more of the components may be used by being selectively coupled or substituted between the embodiments without departing from the technical spirit and scope of the present invention.

In addition, terms (including technical and scientific terms) used in the embodiments of the present invention may be interpreted according to meanings that are generally understood by those skilled in the art to which the present invention pertains, unless specifically defined and described explicitly, and the meanings of generally used terms such as terms defined in the dictionary may be interpreted in consideration of the contextual meaning of the related art.

In addition, the terms used in the embodiments of the present invention are intended to describe the embodiments and are not intended to limit the present invention.

In this specification, the singular form may also include the plural form unless otherwise specified in the phrase, and when it is described as "at least one (or one or more) of A and B, C," it may include one or more of all possible combinations of A, B, and C.

In addition, in describing the components of the embodiment of the present invention, terms such as first, second, A, B, (a), and (b) may be used.

These terms are only intended to distinguish a component from other components, and the essence, sequence, or order of the corresponding components is not limited by the terms.

In addition, when it is described that a component is "connected," "coupled," or "joined" to another component, this may include not only a case in which the component is directly connected, coupled, or connected to the other component, but also a case in which the component is "connected," "coupled," or "joined" to the other component through other components interposed therebetween.

In addition, when it is described that a component is formed or disposed "over (above)" or "under (below)" another component, "over (above)" and "under (below)" include not only a case in which the two components are in direct contact with each other but also a case in which one or more other components are formed or disposed between the two components. In addition, the expressed "over (above) or under (below)" may also include the meaning of not only an upward direction but also a downward direction with respect to one component.

Hereinafter, the embodiment will be described in detail with reference to the accompanying drawings, and the same or corresponding components are given the same reference numerals regardless throughout the drawings and overlapping description thereof will be omitted.

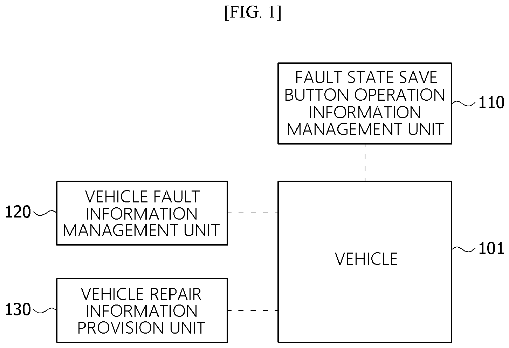

FIG. 1 is a block diagram of an apparatus for managing a vehicle according to an embodiment.

According to an embodiment, the apparatus for managing the vehicle may include a fault state save button operation information management unit 110, a vehicle fault information management unit 120, and a vehicle repair information provision unit 130.

The apparatus for managing the vehicle or a component of the apparatus for managing the vehicle may include at least some of a memory, a processor, a data transceiver, and the like. The apparatus for managing the vehicle or the component of the apparatus for managing the vehicle may include at least some of a computing device, a database, a communication device, and the like.

Various information to be described below used by the apparatus for managing the vehicle or the device mounted on the vehicle to be described below may include at least some of all information or data which may be acquired from the vehicle. The various information to be described below used by the apparatus for managing the vehicle or the device mounted on the vehicle to be described below may include at least some of all results, information, or data analyzed based on at least some of all information or data which may be acquired from the vehicle. The various information to be described below used by the apparatus for managing the vehicle or the device mounted on the vehicle to be described below may include at least some of all information or data which may be acquired from another device through communication or transmitted to another device through communication.

According to an embodiment, the fault state save button operation information management unit 110 may manage information on an operation of the fault state save button configured to store a fault state of a vehicle 101.

The vehicle fault information management unit 120 may manage information related to the fault of the vehicle 101.

The vehicle repair information provision unit 130 may provide information related to vehicle repair based on analysis of the information related to the fault of the vehicle 101.

According to an embodiment, in the apparatus for managing the vehicle, when the fault state save button operation information management unit 110 confirms the operation of the fault state save button of the vehicle 101, the vehicle fault information management unit 120 may receive information related to the fault of the vehicle 101 from the vehicle 101.

According to an embodiment, the vehicle repair information provision unit 130 may transmit to the vehicle 101 or a user terminal the information related to the vehicle repair derived using big data analysis of the information related to the fault of the vehicle 101. The user terminal may include a portable device used by a user, a driver, or an occupant who uses the vehicle 101. The user terminal may include a smart phone, a tablet PC, or the like.

According to an embodiment, the vehicle repair information provision unit 130 may provide the information related to the vehicle repair according to a fault level. The vehicle repair information provision unit 130 may transmit to the vehicle 101 or the user terminal the information related to the vehicle repair according to the fault level.

The apparatus for managing the vehicle can efficiently handle faults which occur in the vehicle, develop the vehicle by generating or providing a fault state storage mode which makes it easy to analyze big data, and increase the convenience of consumers who are users.

The apparatus for managing the vehicle can increase user or consumer satisfaction. The apparatus for managing the vehicle may easily identify the fault mode even without the user going to a customer service center to explain everything. The apparatus for managing the vehicle may check the fault by reproducing the stored state of the vehicle.

The apparatus for managing the vehicle may transmit information on the fault mode to a device disposed in a finished vehicle, the customer service center, or the like in advance, thereby securing components in advance, and provide measurements or services so that self-repair for a simple fault is possible.

The apparatus for managing the vehicle may confirm the same quality and cost. The apparatus for managing the vehicle may provide a guide for a similar fault to a mechanic using big data or the like, thereby providing better quality of the repair and decreasing the cost.

The apparatus for managing the vehicle may secure the reliability for a business-to-business (B2B) vehicle fault. The apparatus for managing the vehicle has the advantages that users who use B2B vehicles may easily report faults and quality may be further secured due to good convenience and consistency, and may diagnose faults beforehand using an over-the-air (OTA) service through the fault mode big data analysis.

Since the apparatus for managing the vehicle is advantageous in collecting the big data and thus easily collects the big data of the fault state of the vehicle, it is very easy to find out a time point when a specific fault occurs with a problem which also occurs in other services.

The apparatus for managing the vehicle may easily identify the time point when the vehicle malfunctions using the fault state save button of the vehicle, and also confirm a vehicle state at that time point, thereby providing the user with convenience.

The apparatus for managing the vehicle may provide a future robust design guide through the big data analysis.

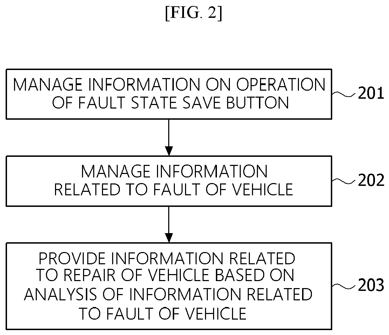

FIG. 2 is a flowchart of a method of managing the vehicle according to an embodiment.

According to an embodiment, each operation of the method of managing the vehicle may be performed by at least some of the components of the above-described apparatus for managing the vehicle.

In operation 201, the apparatus for managing the vehicle may manage information on the operation of the fault state save button configured to store the fault state of the vehicle.

In operation 202, the apparatus for managing the vehicle may manage the information related to the fault of the vehicle.

According to an embodiment, the apparatus for managing the vehicle may confirm the operation of the fault state save button of the vehicle, and receive the information related to the fault of the vehicle from the vehicle or the device mounted on the vehicle when the operation of the fault state save button of the vehicle is confirmed.

When the fault state save button of the vehicle is operated, the vehicle or the device mounted on the vehicle may store the state of the fault mode or the information or data related to the fault mode, and additionally store certain specific values other than the real-time storage state. The vehicle or the device mounted on the vehicle may transmit at least some of the stored state, information, data, or the like to the apparatus for managing the vehicle.

The data stored in the vehicle or the device mounted on the vehicle may include data based on the on-board diagnostics (OBD) (e.g. engine / tire pressure, etc.). When the fault state storage mode is operated, all information inside and outside the vehicle together with the OBD data may be stored in real time. Information of sensors, cameras, or LIDAR in the vehicle may be continuously stored, and a microphone installed in the vehicle may be operated so that the sounds inside or outside the vehicle are stored. At this time, the user may also describe and store problems which occur through the microphone. For example, the problem stored by the user may include "Problem A is currently occurring, and frequently occurs in case B" and the like (e.g. A and B may include various cases.).

When the storage of the fault mode of the vehicle or the device mounted on the vehicle is selected, a storage time of the fault mode may be set to a default value of about 10 minutes upon normal operation (e.g. the storage time or the default value changeable by the user). Even when the ignition is turned off, the fault mode may be stored for about 10 minutes. After 10 minutes have elapsed, a notice or notification may be provided to the user through the user terminal or the device mounted on the vehicle (e.g., the storage of the fault mode is terminated upon non-click or non-touch after confirming whether to continuously store the fault mode). When a space in which storage is possible for about 3 to 4 hours is secured, a plurality of various cases may be set to be storable.

The information, data, or factor (INPUT) stored when the storage of the fault mode of the vehicle or the device mounted on the vehicle is selected may include all data (e.g. coolant temperature, engine / battery pressure, accelerator operation time, and the like) which may be collected from the OBD (2), sounds recorded after operations of microphones inside or outside the vehicle (with consumers' consent), information or data acquired from vehicle sensors (e.g. RADAR, LIDAR, ultrasonic sensor, or camera data), information or data collected from CAN / LIN communication (e.g. values for the communication of electronic control units, and component diagnostic data), information for navigation and audio, video, and navigation (AVN) (e.g. vehicle position, or information progressed through the AVN, and the like), information or data acquired from an inertial measurement unit (IMU), and the like.

The vehicle or the device mounted on the vehicle may include a storage medium such as a memory or a storage unit. The storage medium may include a data storage module or DATA STORE MODULE (such as an in-vehicle hard disk or SD card). In the case of the in-vehicle hard disk or SD card, the storage medium is positioned in a cockpit and may be easily attached / attached by a mechanic or a user. The storage medium may be set to be physically attachable / detachable in order to quickly transfer a large amount of data.

The information or data stored in the vehicle and the device mounted on the vehicle may include numerical values or code values, etc. and include encrypted data values for at least some of all information described above in the specification.

In operation 203, the apparatus for managing the vehicle may provide the information related to the vehicle repair based on the analysis of the information related to the fault of the vehicle.

According to an embodiment, the apparatus for managing the vehicle may transmit to the vehicle or the user terminal the information related to the vehicle repair derived using the big data analysis of the information related to the fault of the vehicle.

According to an embodiment, the apparatus for managing the vehicle may provide the information related to the vehicle repair according to the fault level.

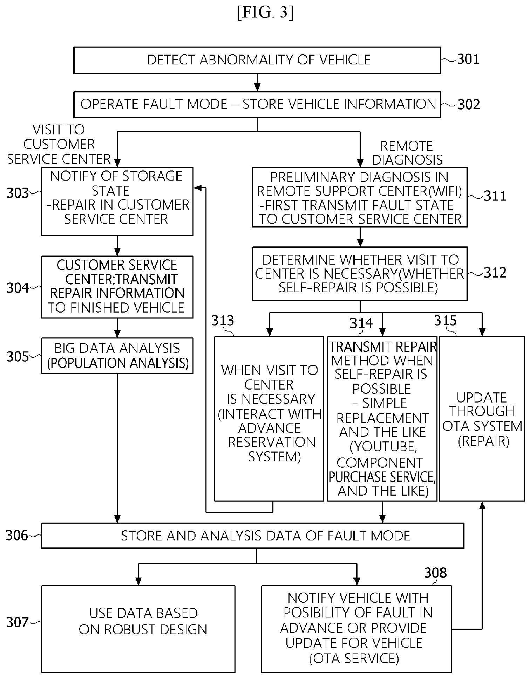

FIG. 3 is a flowchart of the method of managing the vehicle according to an embodiment.

In operation 301, the apparatus for managing the vehicle may also receive information on detecting an abnormality of the vehicle from the device mounted on the vehicle. The device mounted on the vehicle may detect the abnormality of the vehicle and transmit related information to the apparatus for managing the vehicle. The device mounted on the vehicle may notify the user of the vehicle or the user terminal of the occurrence of a fault using at least some components of the vehicle (e.g., an output device such as a speaker or a display).

In operation 302, the apparatus for managing the vehicle may receive at least some of all information of the vehicle. When a fault occurs in the vehicle, the device mounted on the vehicle may store all information of the vehicle when the user recognizes the fault (e.g., noise, vibration, abnormal operation, or the like) and presses a button which changes a current mode to the fault state storage mode (when the fault state save button is pressed) and transmit at least some of all the information of the vehicle to the apparatus for managing the vehicle. All the information of the vehicle may include information on engine heat, speed, AVN state, internal and external sounds through the in-vehicle microphone, a song being played, operating components, and the like. The device mounted on the vehicle may primarily store and save related information or data when the operation of the vehicle or the like is terminated or the user terminates the fault state storage mode.

In operation 303, when the user visits the customer service center, the apparatus for managing the vehicle may transmit at least some of the information related to the fault among all the information of the vehicle to the device disposed in the customer service center or the like using position information and the like of the vehicle or the user terminal. The device disposed in the customer service center or the like may include at least some of a computing device and a communication device.

The user may wirelessly transmit the information on the stored fault to a device positioned at a place where the vehicle may be repaired through the device mounted on the vehicle. In addition, the user may go directly to the customer service center or also notify of the corresponding fault state through the user terminal or the like. Accordingly, remote diagnosis is possible and components may be supplied in advance. The device positioned at the place where the vehicle may be repaired may include at least some of the computing device or the communication device.

In operation 304, the apparatus for managing the vehicle may receive the information related to the vehicle repair from the device disposed in the customer service center or the like, the device positioned at the place where the vehicle may be repaired, the user terminal, the device mounted on the vehicle, or the like.

In the customer service center, the vehicle may be repaired based on the corresponding fault mode, and in the customer service center, the repair information or the information related to the vehicle repair may be transmitted to the finished vehicle or the device mounted on the vehicle through the device or the like disposed in the customer service center or the like. The apparatus for managing the vehicle or the device disposed in the customer service center or the like may use or include a database or a management agent such as an oracle enterprise management unit / Oracle Enterprise Manager (OEM).

In operation 305 or operation 306, the apparatus for managing the vehicle may perform the big data analysis or data analysis of the fault mode of the vehicle. The apparatus for managing the vehicle may collect or receive data related to the fault mode of the vehicle from the device disposed in the customer service center or the like or the device mounted on the vehicle, and analyze the received data.

The apparatus for managing the vehicle may notify of or transmit an optimal repair method derived based on the big data analysis to the device disposed in the customer service center, the user terminal, or the like. The apparatus for managing the vehicle may share a component purchase service and a repair method for the simple fault (component replacement) with the user through the user terminal or the like.

In operation 307, the apparatus for managing the vehicle may transmit related data or an analyzed result to a server of a design-related institution and the like for the result analyzed using the big data to be used for the robust design of the vehicle.

In operation 308, the apparatus for managing the vehicle may notify the vehicle or the device mounted on the vehicle in which the fault may occur and may be expected in advance. The apparatus for managing the vehicle may transmit information on fault prediction to the vehicle or the device mounted on the vehicle. Advantageously, the apparatus for managing the vehicle can inform the user of better driving habits through the big data analysis.

In operation 311, the apparatus for managing the vehicle may perform preliminary diagnosis using a system of a remote support center when the user requests the remote diagnosis through the user terminal, the device mounted on the vehicle, or the like. At this time, the data related to the fault state of the vehicle may be first transmitted to the device disposed in the customer service center or the like.

In operation 312 , the apparatus for managing the vehicle may analyze the data and determine or decide whether visit to the customer service center is necessary. The apparatus for managing the vehicle may determine or decide whether self-repair is possible. The apparatus for managing the vehicle may transmit to the device mounted on the vehicle, the user terminal, or the like whether the visit to the center is necessary or whether the self-repair is possible.

In operation 313, the apparatus for managing the vehicle may transmit reservation-related information or reservation request information to the device mounted on the vehicle or the user terminal by interacting with an advance reservation system when it is determined that the visit of the vehicle to the customer service center is necessary.

In operation 314, the apparatus for managing the vehicle may transmit a repair method to the device mounted on the vehicle, the user terminal, or the like when it is determined that the self-repair of the vehicle such as simple replacement of vehicle components is possible for the user. The apparatus for managing the vehicle may provide information related to the repair method using a video, such as YouTube, or the component purchase service through the device mounted on the vehicle or the user terminal.

In operation 315, when it is determined that the wireless repair of the vehicle is possible, the apparatus for managing the vehicle may provide updates through the wireless communication, such as OTA, to the device mounted on the vehicle or the corresponding vehicle.

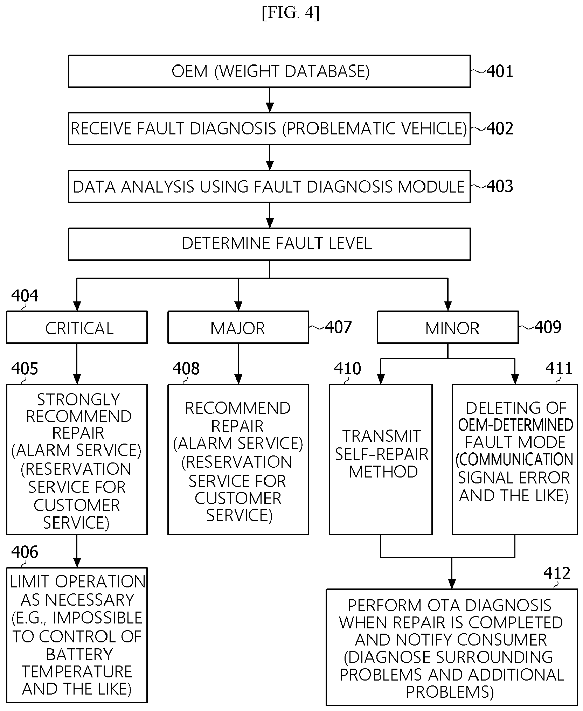

FIG. 4 is a flowchart of remote diagnosis of the method of managing the vehicle according to an embodiment.

In operation 401, the apparatus for managing the vehicle may manage at least some of all information of the vehicle using a database, such as OEM or a weight database, or the like.

In operation 402, the apparatus for managing the vehicle may receive data on the fault diagnosis of the vehicle from a problematic vehicle or a device mounted on the problematic vehicle.

In operation 403, the apparatus for managing the vehicle may perform data analysis for the fault or information of the vehicle using a fault diagnosis module or the like.

In operation 404, operation 407, or operation 409, the apparatus for managing the vehicle may decide or determine the fault level of the vehicle according to the data analysis result.

According to an embodiment, the fault level may include CRITICAL, MAJOR, MINOR, and the like.

According to an embodiment, the fault level may be a first level to an Nth level (N is a natural number which is greater than or equal to 2). The higher the level, the greater the severity of the fault, and the lower the level, the less the severity of the fault. In another example, the reverse is also possible.

In operation 404, the apparatus for managing the vehicle may determine/decide the fault level as CRITICAL.

In operation 405, the apparatus for managing the vehicle may provide an alarm service which strongly recommends the repair of the vehicle through the device mounted on the vehicle or the user terminal when the fault level is determined or decided as CRITICAL. The apparatus for managing the vehicle may provide a reservation service for the customer service through the device mounted on the vehicle or the user terminal.

In operation 406, the apparatus for managing the vehicle may limit the operation of the vehicle as necessary. For example, when a battery temperature of the vehicle is uncontrollable, the apparatus for managing the vehicle may provide a service for limiting the operation of the vehicle through the vehicle or the device mounted on the vehicle.

In operation 407, the apparatus for managing the vehicle may determine or decide the fault level as MAJOR.

In operation 408, the apparatus for managing the vehicle may provide the alarm service for recommending the repair of the vehicle when the fault level is determined or decided as MAJOR. The apparatus for managing the vehicle may provide a service related to the repair of the vehicle through the device mounted on the vehicle, the user terminal, or the like. The apparatus for managing the vehicle may provide the reservation service for the customer service through the device mounted on the vehicle or the user terminal.

In operation 409, the apparatus for managing the vehicle may determine or decide the fault level as MINOR.

In operation 410, when the fault level is determined or decided as MINOR and it is determined or decided that the self-repair is possible, the apparatus for managing the vehicle may provide the service related to a self-repair method through the device mounted on the vehicle, the user terminal, or the like. The apparatus for managing the vehicle may transmit the self-repair method and the like to the device mounted on the vehicle, the user terminal, or the like.

In operation 411, when the fault level is determined or decided as MINOR and determined as being an error such as a communication signal error, the apparatus for managing the vehicle may delete the information related to the fault mode, such as deleting of an OEM-determined fault mode. The apparatus for managing the vehicle may provide a service related to the error through the device mounted on the vehicle, the user terminal, or the like. The apparatus for managing the vehicle may transmit an error resolution method or the like to the device mounted on the vehicle, the user terminal, or the like.

In operation 412, the apparatus for managing the vehicle may perform the OTA diagnosis upon completion of the self-repair (or upon resolution of the error) of the vehicle and provide a consumer notification to the user through the device mounted on the vehicle, the user terminal, or the like. The apparatus for managing the vehicle may provide the diagnosis for surrounding problems or additional problems of the vehicle through the device mounted on the vehicle, the user terminal, or the like.

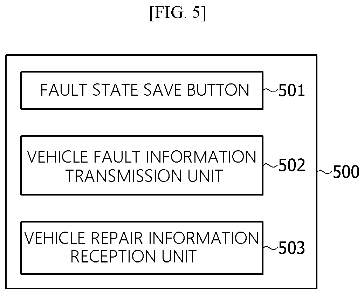

FIG. 5 is a block diagram of the device mounted on the vehicle according to an embodiment.

According to an embodiment, a device 500 mounted on the vehicle may include a fault state save button 501, a vehicle fault information transmission unit 502, and a vehicle repair information reception unit 503.

The device 500 mounted on the vehicle or components of the device 500 mounted on the vehicle may include at least some of a vehicle, a controller mounted on the vehicle, a memory, a processor, a data transmitter or receiver, a button, a display, a touch screen, and the like.

The device mounted on the vehicle may provide a method of operating the device mounted on the vehicle performed by at least some of the components of the device mounted on the vehicle. The method of operating the device mounted on the vehicle may include at least some of the operations of the device mounted on the vehicle described in the specification. Each operation of the method of operating the device mounted on the vehicle may include at least some of the operations of the device mounted on the vehicle described in the specification. In addition, the user terminal may perform at least some of all operations of the device mounted on the vehicle.

The fault state save button 501 may include a button mounted on at least a part of the vehicle to store the fault state of the vehicle. The button may be a mechanical type or an electronic type, and may include a button displayed on a display of the vehicle.

The button may be provided as a button for the user who is a consumer to store the fault mode in the cockpit of the vehicle or the like. The button may be disposed on the AVN provided in a general vehicle, a shared vehicle (e.g., a Purpose Built Vehicle (PBV)), or the like. The button may be provided or disposed on the vehicle in a form in which it may be attached to a position desired by the user.

The vehicle fault information transmission unit 502 may transmit the information related to the fault of the vehicle to the apparatus for managing the vehicle.

The vehicle repair information reception unit 503 may receive the information related to the repair of the vehicle provided based on the analysis of the information related to the fault of the vehicle from the apparatus for managing the vehicle.

According to an embodiment, when the fault state save button 501 operates, the vehicle fault information transmission unit 502 may transmit the information related to the fault of the vehicle to the apparatus for managing the vehicle.

According to an embodiment, the vehicle repair information reception unit 503 may receive the information related to the repair of the vehicle derived using the big data analysis of the information related to the fault of the vehicle.

According to an embodiment, the vehicle repair information reception unit 503 may receive the information related to the repair of the vehicle according to the fault level.

The term "unit" used in this embodiment means software or hardware components such as a field-programmable gate array (FPGA) or application-specific integrated circuit (ASIC), and the "unit" performs certain roles. However, the "unit" is not limited to software or hardware. The "unit" may also be configured to reside on an addressable storage medium or may also be configured to reproduce one or more processors. Accordingly, as an example, the "unit" includes components, such as software components, object-oriented software components, class components, and task components, processes, functions, attributes, procedures, subroutines, segments of program codes, drivers, firmware, microcodes, circuits, data, databases, data structures, tables, arrays, and variables. The functions provided in the components and "units" may be coupled by a smaller number of components and "units" or further separated by additional components and "units." In addition, the components and the "units" may also be implemented to reproduce one or more CPUs in a device or security multimedia card.

Although an exemplary embodiment of the present invention has been described above, those skilled in the art will be able to understand that the present invention may be variously modified and changed without departing from the spirit and scope of the present invention described in the appended claims.

## Claims

1. An apparatus for managing a vehicle, the apparatus comprising:
a vehicle fault information management unit configured to manage information related to a fault of the vehicle; and
a vehicle repair information provision unit configured to provide information related to repair of the vehicle based on analysis of the information related to the fault of the vehicle.

2. The apparatus of claim 1, further comprising a fault state save button operation information management unit configured to manage information on an operation of the fault state save button configured to store a fault state of the vehicle.

3. The apparatus of claim 2, wherein, when the fault state save button operation management unit confirms the operation of the fault state save button of the vehicle, the vehicle fault information management unit receives the information related to the fault of the vehicle from the vehicle.

4. The apparatus of claim 3, wherein the vehicle repair information provision unit transmits to the vehicle or a user terminal the information related to the repair of the vehicle derived using big data analysis of the information related to the fault of the vehicle.

5. The apparatus of any one of claims 1 to 4, wherein the vehicle repair information provision unit provides the information related to the repair of the vehicle according to a fault level.

6. A device mounted on a vehicle, the device comprising:
a vehicle fault information transmission unit configured to transmit information related to a fault of the vehicle to an apparatus for managing the vehicle; and
a vehicle repair information reception unit configured to receive information related to repair of the vehicle provided based on analysis of the information related to the fault of the vehicle from the apparatus for managing the vehicle.

7. The device of claim 6, further comprising a fault state save button configured to store a fault state of the vehicle.

8. The device of claim 7, wherein, when the fault state save button is operated, the vehicle fault information transmission unit transmits the information related to the fault of the vehicle to the apparatus for managing the vehicle.

9. The device of claim 8, wherein the vehicle repair information reception unit receives the information related to the repair of the vehicle derived using big data analysis of the information related to the fault of the vehicle.

10. The device of any one of claims 6 to 9, wherein the vehicle repair information reception unit receives the information related to the repair of the vehicle according to a fault level.

11. A method of managing a vehicle, the method comprising:
managing information related to a fault of the vehicle; and
providing information related to repair of the vehicle based on analysis of the information related to the fault of the vehicle.

12. The method of claim 11, further comprising managing information on an operation of a fault state save button configured to store a fault state of the vehicle.

13. The method of claim 12,
wherein the managing of the information on the operation of the fault state save button includes confirming the operation of the fault state save button of the vehicle, and
the managing of the information related to the fault of the vehicle includes receiving the information related to the fault of the vehicle from the vehicle when the operation of the fault state save button of the vehicle is confirmed.

14. The method of claim 13, wherein the providing of the information related to the repair of the vehicle includes transmitting to the vehicle or a user terminal the information related to the repair of the vehicle derived using big data analysis of the information related to the fault of the vehicle.

15. The method of claim 11, wherein the providing of the information related to the repair of the vehicle includes providing the information related to the repair of the vehicle according to a fault level.
